# EUROPEAN PATENT APPLICATION

(11) **EP 1 653 667 A1**
(43) Date of publication of application: **03.05.2006**
(21) Application number: 04292546.1
(22) Date of filing: 26.10.2004
(51) Int. Cl.: H04L 12/28

(54) **A method for dynamically adapting beacon frames, an access point and a program module therefor**

(71) Applicant: ALCATEL, 75008 Paris (FR)
(72) Inventor: Fiat, Lionel, 92100 Boulogne Billancourt (FR)
(74) Representative: Rausch, Gabriele

(57) **Abstract**

The invention concerns a method for determining an appropriate access point (AP1) for connecting a mobile terminal (STA1) to a Wireless Local Area Network comprising at least one access point (AP1) whereby at least one of said at least one access point (AP1) dynamically sends beacon frames (BC) according to the traffic load, a mobile terminal (STA1), an access point (AP1) and a program module therefor.

## Description

The invention relates to a method for determining an appropriate access point (AP1) for connecting a mobile terminal (STA1) to a Wireless Local Area Network (WLAN) according to the preamble of claim 1, an access point according to the preamble of claim 4 and a program module according to the preamble of claim 6.

The WLAN standards IEEE 802.11a/b/g are experiencing a successful development. This success is mainly based upon the use of these standards in enterprise networks, hot spots and at home, i.e. conference centers, railway stations, airports, hotels and so on. In both environments, Voice over Internet Protocol (VoIP) and Voice over WLAN (VoWLAN) are becoming attractive technologies with the main goal to reduce the communication costs by merging data and voice networks.

Offering real time handover is an essential requirement for VoWLAN and other real time services like video conferences and therefore the handover between two WLAN access points is an active subject of research because the handover time has to be drastically reduced in order to allow VoWLAN seamless mobility between two IEEE 802.11 access points.

During a handover, one phase consists in measuring (scanning) the radio link qualities of potential candidate access points. The IEEE 802.11 standard only defines quite slow methods for passive and active scanning to perform these measurements. Active scanning according to the IEEE 802.11 standard is the faster one, but it is still too long to carry out a fast handover in accordance with real time service requirements. Furthermore, the standard measurements with active scanning solution require to perform probe exchanges with candidate access points which consumes radio channel bandwidth for measurement that is then not available for user data.

The IEEE 802.11 standard passive scanning is implemented in such a way that the mobile terminal listens for so-called beacons from access points on every IEEE 802.11 channel to detect all potential candidate access points to carry out a handover by means of measuring the power of the received beacons. Each access point usually emits a beacon every 100 ms and it is considered that this beacon's cyclic timer value must not be lower than 60 ms in order not to overload the IEEE 802.11 radio channel. These values for the cyclic timer are too high to allow to carry out a fast handover.

The general realization of the connection from a mobile terminal to an access point in a WLAN network allows non-equal radio link powers for uplink and downlink direction.

If the uplink and downlink powers are equal, a downlink radio link measurement is sufficient to perform radio link measurements of the candidate access points. Such an equality of the uplink and downlink power is mandatory for the IEEE 802.11a standard, which in turn requires Transmit Power Control (TPC). The IEEE 802.11k draft standard also introduces the ability for mobile terminals according to the IEEE 802.11b/g standard to know the downlink power of the access point and then to communicate with the access point at the same power for uplink. If the IEEE 802.11k definitive standard will comprise this feature, downlink radio link measurements will be sufficient to perform a handover according to the IEEE 802.11b/g standard.

The object of the invention is to propose a solution to determine an appropriate access point for connecting a mobile terminal to a Wireless Local Area Network (WLAN).

This object is achieved by a method according to the teaching of claim 1, an access point according to the teaching of claim 4 and a program module according to the teaching of claim 6.

The main idea of the invention is, that an access point does not send beacons with a static timer value of e.g. 60 ms or 100 ms, but dynamically regulates this value according to the traffic load of the corresponding channel. In details, every access point will match its beacon timer value for every channel according to the channel load in such an adaptive way, that
- if there is no or few traffic for the channel, the access point will send a beacon with a short timer value of e.g. 5 ms,
- if the traffic load becomes medium, the access point will send a beacon with a medium timer value of e.g. 15 ms,
- if the channel is quite loaded, the access point will send a beacon with a long timer value of e.g. 60 ms and the mobile terminal will use other types of communication with the access point to perform its candidate access point radio link measurement.

This adaptation of the timer value can e.g. be complemented with other active scanning procedures like measuring the power of received user data by the mobile terminal in case the traffic load is above a certain threshold value.

The proposed method according to the invention enables to carry out a fast and low cost IEEE 802.11 handover that is fully compliant with the IEEE 802.11a standard version which is a very interesting version for offering real time services as the IEEE 802.11a standard enables an easy cellular deployment related to the high number of non-overlapping available frequencies.

Furthermore, this method enables to avoid the systematic provision of a channel load part for fast handover solution using an active scanning method which decreases the maximum user traffic capability.

Further developments of the invention can be gathered from the dependent claims and the following description.

In the following the invention will be explained further making reference to the attached drawing.

The WLAN network in which the invention can be implemented comprises at least one access point and at least one mobile terminal.

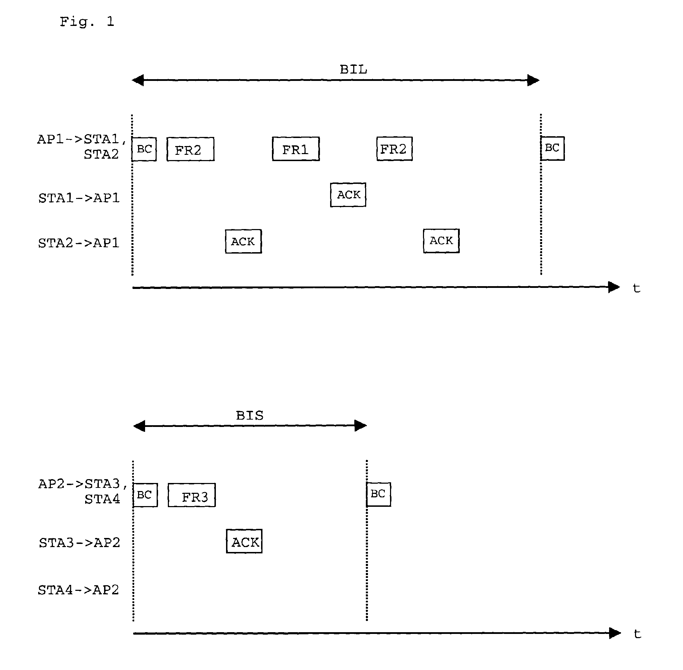

In the example described by means of fig. 1, this WLAN network comprises two access points AP1 and AP2 and four mobile terminals STAI-STA4.

The access points AP1 and AP2 are both connected to each other via a backbone system and the two mobile terminals STA1 and STA2 are connected to the access point AP1 and the two mobile terminals STA3 and STA4 are connected to the access point AP2 via wireless connections. The mobile terminals STA1-STA4 that are connected via wireless connections to the access points AP1 and AP2 resp. can by means of the backbone system be further connected to other mobile terminals within the same WLAN network. Furthermore, these mobile terminals STA1-STA4 can also be connected by means of the backbone system and via gateways to devices like e.g. terminals or servers located in further networks like e.g. the Internet or another mobile network.

The access points AP1, AP2 comprise the functionality of an access point of a WLAN network, i.e. they provide the possibility for mobile terminals to get connected to the WLAN network. Furthermore, according to the invention the access points AP1, AP2 comprise means for sending beacon frames BC dynamically according to the traffic load.

In another embodiment, the access points AP1, AP2 additionally comprise means for sending beacon frames BC dynamically according to the distribution of the traffic classes of the traffic load, with the traffic classes assigning a priority and/or a requested quality of service to the corresponding traffic load.

The mobile terminals STA1-STA4 comprise the functionality of a mobile terminal for a WLAN network, i.e. they can be connected to a WLAN network by means of the access points AP1, AP2.

In the following, by way of example the method according to the invention is described in detail making reference to fig. 1.

Fig. 1 schematically shows the data transfer according to one embodiment of the invention between the access point AP1 and the mobile terminals STA1 and STA2 and between the access point AP2 and the mobile terminals STA3 and STA4 all belonging to the same WLAN network and with said mobile terminals STA1 and STA2 being connected to said access point AP1 and with said mobile terminals STA3 and STA4 being connected to said access point AP2. The data transfer schemes depicted in fig. 1 are used in order to perform a method for determining an appropriate access point for connecting a mobile terminal to a Wireless Local Area Network according to the invention.

The upper part of fig. 1 shows the data transfer scheme in case of a high traffic load of the channel between the access point AP1 and the mobile terminals STA1 ,STA2.

The lower part of fig. 1 shows the data transfer scheme in case of a low traffic load of the channel between the access point AP2 and the mobile terminals STA3, STA4.

The two data transfer schemes depicted in fig. 1 show each in the upper row the data packets sent from the access point AP1 to the mobile terminals STA1 and STA2 and from the access point AP2 to the mobile terminals STA3 and STA4 and in the lower row the data packets sent from said mobile terminals STA1 and STA2 to said access point AP1 and from said mobile terminals STA3 and STA4 to said access point AP2 all plotted against the timeline t.

The access points AP1, AP2 preferably perform the transmission of data to the mobile terminals STA1-STA4 in more or less periodic time intervals called beacon intervals BIL or BIS. The time spans of such beacon intervals BIL or BIS are depicted in fig. 1 by the two double arrows. At the beginning of a beacon interval BIL or BIS, the access points AP1, AP2 broadcast beacon frames BC which are management frames that maintain the synchronization of the timers in the mobile terminals and deliver protocol related parameters. As the beacon frames BC are broadcasted from the access points AP1 and AP2, the beacon frames BC can be received by every mobile terminal that is within the coverage of the radio link of the access point AP1 and AP2 resp., and every mobile terminal within the coverage of the radio link of the access point AP1 or AP2 has the opportunity to perform power measurements at least once within a beacon interval BIL or BIS by measuring the power of the received beacon frame BC. In the example described by use of fig. 1, all mobile terminals STA1-STA4 are within the coverage of the radio links of both access points AP1 and AP2. By using these measurements, the decision whether a handover to another access point is necessary can be made at the beginning of each beacon interval BIL or BIS by comparing the measurements with certain threshold values. Thus, in case of VoWLAN traffic data, this decision can be made at least every 100 ms, as the beacon interval for VOWLAN traffic data has typically the length of 100 ms.

According to the upper data transfer scheme describing a high traffic load situation, after broadcasting of the beacon frame BC preferably follows a space of time of a certain length in order to trigger various transmission procedures. In the upper data transfer scheme it is shown that after a certain pause user related data FR2 are sent from the access point AP1 to the mobile terminal STA2 comprising data like e.g. voice data for said mobile terminal STA2 and/or polling data for said mobile terminal STA2 to ask for data that are pending in said mobile terminal STA2.

After reception of the user related data FR2 and another pause, the mobile terminal STA2 responds to the access point AP1 through sending further user related data ACK comprising e.g. an acknowledgement to the access point AP1.

The access point AP1 in turn sends additional user related data FR1 to the mobile terminal STA1 after a pause has elapsed comprising data like e.g. voice data for the mobile terminal STA1 and/or polling data for said mobile terminal STA1 to ask for data that are pending in said mobile terminal STA1.

Subsequent, the dedicated mobile terminal STA1 acknowledges the reception of the user related data FR1 after a pause through sending user related data ACK to the access point AP1.

Finally, the access point AP1 sends the remaining user related data FR2 to the mobile terminal STA2 and after a pause the mobile terminal STA2 acknowledges the reception of the user related data FR2 through sending user related data ACK to the access point AP1.

As can be seen in the upper data transfer scheme, the usage of the channel between the access point AP1 and the mobile terminals STA1, STA2, i.e. the traffic load, is around 90 % considering the beacon interval BIL and therefore high. As a consequence of this, the beacon frames BC can not be sent more often than depicted in the upper data transfer scheme, i.e. the beacon interval BIL can not be reduced, in order not to derogate the transfer of user related data.

The lower data transfer scheme describes a low traffic load situation, e.g. after sending of the beacon frame BC and a space of time of a certain length, user related data FR3 comprising data like e.g. voice data for the mobile terminal STA3 and/or polling data for said mobile terminal STA3 to ask for data that are pending in said mobile terminal STA3 are sent only once from the access point AP2 to the mobile terminal STA3.

After the mobile terminal STA3 has received the user related data FR3 and another pause has elapsed, the dedicated mobile terminal STA3 responds to the access point AP2 through sending further user related data ACK comprising e.g. an acknowledgement to the access point AP2.

Now, there are no more data pending neither in the access point AP2 nor in the mobile terminals STA3, STA4 and therefore, the channel between the access point AP2 and the mobile terminal STA3, STA4 will no longer be used.

As the traffic load is drastically reduced in this case compared with the upper data transfer scheme to a value of about 30 % considering the beacon interval BIL, the beacon frames BC are sent more often than in the upper data transfer scheme, i.e. the beacon interval BIS is shorter than the beacon interval BIL, without derogating the transfer of user related data.

As the beacon frames BC are used by the mobile terminals STA1-STA4 for power measurements in a passive scanning scenario, the quality of the downlink radio link from the access points AP1, AP2 to the mobile terminals STA1-STA4 can be determined more frequently in the case of the downlink radio link from access point AP2.

In another embodiment of the invention, the frequency of sending beacon frames BC from the access points AP1, AP2 to the mobile terminals STA1-STA4 is related to the distribution of the traffic classes of the traffic load, i.e. if there is a large part of the traffic load with high quality of service requirements, then the beacon frames BC shall not be sent as often as in case of a large part of the traffic load having low quality of service requirements in order to fulfill the corresponding quality of service requirements.

In a preferred embodiment of the invention, the uplink power from the connection of a mobile terminal to an access point equals the downlink power of said connection, i.e. in this case the radio link quality is fully determined by measuring the downlink power by means of the method according to the invention.

## Claims

1. A method for determining an appropriate access point (AP1) for connecting a mobile terminal (STA1) to a Wireless Local Area Network comprising at least one access point (AP1) **characterized in, that** at least one of said at least one access point (AP1) dynamically sends beacon frames (BC) according to the traffic load.

2. A method according to claim 1, **characterized in, that** the beacon frames (BC) are sent dynamically according to the distribution of the traffic classes of the traffic load.

3. A method according to claim 1 or claim 2, **characterized in, that** in said Wireless Local Area Network the uplink power equals the downlink power.

4. An access point (AP1) for communicating within a Wireless Local Area Network comprising at least one mobile terminal (STA1) **characterized in, that** said access point (AP1) comprises means for sending beacon frames (BC) dynamically according to the traffic load.

5. An access point (AP1) according to claim 4 **characterized in, that** said access point (AP1) comprises means for sending beacon frames (BC) dynamically according to the distribution of the traffic classes of the traffic load.

6. A program module to be executed in an access point (AP1) for communicating within a Wireless Local Area Network comprising at least one mobile terminal (STA1) **characterized in, that** if said program module is activated, beacon frames (BC) are sent dynamically according to the traffic load.

7. A program module according to claim 6, **characterized in, that** if said program module is activated, beacon frames (BC) are sent dynamically according to the distribution of the traffic classes of the traffic load.
